# EUROPEAN PATENT APPLICATION

(11) **EP 3 636 452 A1**
(43) Date of publication of application: **15.04.2020**
(21) Application number: 18812916.7
(22) Date of filing: 17.04.2018
(51) Int. Cl.: B60C 5/01

(54) **TIRE**

(30) Priority: 05.06.2017 JP 2017110916
(71) Applicant: Bridgestone Corporation, Tokyo 104-8340 (JP)
(72) Inventor: KON, Seiji, Tokyo 104-8340 (JP); NAKAKITA, Yukinori, Tokyo 104-8340 (JP); KOUNO, Yoshihide, Tokyo 104-8340 (JP)
(74) Representative: Oxley, Robin John George
(86) International application number: PCT/JP2018/015912
(87) International publication number: WO 2018/225387

(57) **Abstract**

A tire includes a circular tire case formed from a resin material, a belt provided at an outer side in a tire radial direction of the tire case and configured by covering a reinforcing cord by a covering resin, the reinforcing cord being provided with an adhesion layer at an outer periphery thereof, and a tread provided at an outer periphery of the belt and configured from a rubber material. The belt has a gauge set within a range of from 1.15 mm to 2.0 mm. A relationship A > B is satisfied, wherein A is a thickness of the covering resin layer from the reinforcing cord to an outer circumferential surface of the belt and B is a thickness of the covering resin layer from the reinforcing cord to the tire case. A combined gauge of the tire case and the belt is not greater than 3.5 mm.

## Description

### Technical Field

The present disclosure relates to a tire.

### Background Art

Japanese Patent Application Laid-Open (JP-A) No. 2014-210487 discloses a tire in which a belt configured by covering a reinforcing cord with a covering resin is laid at an outer periphery of a resin tire frame member, and a tread formed of a rubber material is laid at an outer periphery of the belt.

### SUMMARY

### Technical Problem

The tire of the Background Art described above is manufactured by vulcanizing a tire blank, which is configured including the tire frame member, the belt, the tread configured from an unvulcanized rubber material, and so on, in a vulcanization mold.

If moisture present in the rubber material were to permeate the covering resin during vulcanization, the reinforcing cord covered by the covering resin may be affected by this permeated moisture.

In particular, a reinforcing cord configured by a steel cord would be more vulnerable to the effects of moisture than an organic fiber cord.

An object of the present disclosure is to provide a tire in which a reinforcing cord configuring a belt is not readily affected by moisture that might permeate a covering resin from adjacent rubber.

### Solution to Problem

A tire according to a first aspect includes a circular tire frame member formed from a resin material, a belt that is provided at an outer side, in a tire radial direction, of the tire frame member and that is configured by covering a reinforcing cord with a covering resin, and a tread that is provided at an outer periphery of the belt and that is configured from a rubber material. The belt has a gauge within a range of from 1.15 mm to 2.0 mm. A relationship A > B is satisfied, wherein A is a thickness of the covering resin from the reinforcing cord to an outer circumferential surface of the belt and B is a thickness of the covering resin from the reinforcing cord to the tire frame member. A combined gauge of the tire frame member and the belt is not greater than 3.5 mm.

### Advantageous Effects of Invention

In the present disclosure, the cord configuring the belt is not readily affected by moisture that might permeate the covering resin from the rubber material of the adjacent tread.

### BRIEF DESCRIPTION OF DRAWINGS

Fig. 1 is a cross-section sectioned along an axis of a tire according to a first exemplary embodiment.
Fig. 2A is cross-section illustrating a resin-covered cord, part of a tire case, and part of a tread.
Fig. 2B is an enlarged cross-section illustrating a resin-covered cord.
Fig. 3 is a perspective view illustrating a state in which a resin-covered cord has been pressed against an outer periphery of a tire frame member by a press roller.
Fig. 4 is a cross-section sectioned along an axis of a tire according to a second exemplary embodiment.
Fig. 5 is a cross-section illustrating a modified example of a tire according to the second exemplary embodiment.

### DESCRIPTION OF EMBODIMENTS

### First Exemplary Embodiment

Explanation follows regarding a first exemplary embodiment of the present invention, with reference to the drawings. In the drawings, a tire circumferential direction is indicated by an arrow S, a tire axial direction (which may also be understood as a tire width direction) is indicated by an arrow W, and a tire radial direction is indicated by an arrow R. The tire axial direction refers to a direction parallel to an axis of rotation of the tire.

In the following explanation, sides further from a tire equatorial plane CL along the tire axial direction are referred to as "outer sides in the tire axial direction " and side closer to the tire equatorial plane CL along the tire axial direction is referred to as a "an inner side in the tire axial direction ". Moreover, a side further from the tire axis along the tire radial direction is referred to as an "outer side in the tire radial direction", and a side closer to the tire axis along the tire radial direction is referred to as an "inner side in the tire radial direction ".

The methods for measuring the dimensions of respective sections are the methods set out in the 2016 Year Book issued by the Japan Automobile Tire Manufacturers Association (JATMA). In cases in which TRA standards or ETRTO standards are applied in the place of use or place of manufacture, these standards are followed.

### Tire

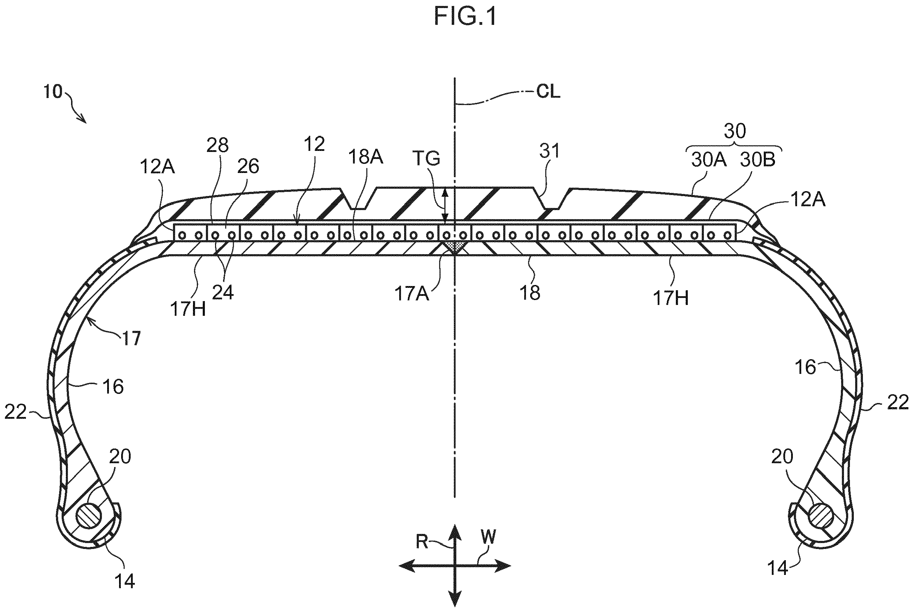

In the present exemplary embodiment, explanation follows regarding an example of a passenger car tire 10 applied with the present invention. As illustrated in Fig. 1, the tire 10 according to the present exemplary embodiment includes a tire case 17 serving as an example of a circular tire frame member, a belt 12, and a tread 30 formed of a rubber material.

The tire case 17 of the present exemplary embodiment is configured employing a thermoplastic elastomer serving as an example of a resin material for a tire frame. The tire case 17 is formed in a circular shape around a tire circumferential direction.

The tire case 17 is configured including a pair of bead portions 14 disposed spaced apart from each other in the tire axial direction, a pair of side portions 16 extending from the pair of bead portions 14 toward an outer side in the tire radial direction, and a crown portion 18 coupling together the pair of side portions 16. The bead portions 14 are locations that contact a rim (not illustrated in the drawings), and a covering layer 22, described later, is provided at a surface of each of the bead portions 14. The side portions 16 form side portions of the tire 10, and curve gently so as to protrude toward outer sides in the tire axial direction on progression from the bead portions 14 toward the crown portion 18.

The crown portion 18 is a location that couples an outer end in the tire radial direction of one of the side portions 16 and an outer end in the tire radial direction of the other of the side portions 16 together, and supports the tread 30 laid at an outer side in the tire radial direction of the crown portion 18.

In the present exemplary embodiment, the crown portion 18 has a substantially uniform thickness. An outer circumferential surface 18A may be formed with a flat profile in cross-section taken along the tire axial direction, or may have a curving profile bulging toward an outer side in the tire radial direction. Note that the outer circumferential surface 18A of the crown portion 18 of the present exemplary embodiment corresponds to an outer periphery of the tire case 17 to which the belt 12 is provided.

The tire case 17 is formed by forming a pair of annular tire halves 17H, each including a single bead portion 14, a single side portion 16, and a half-width crown portion 18. The tire halves 17H are made to face each other and end portions of the half-width crown portions 18 are bonded together at the tire equatorial plane CL. The end portions are bonded together using, for example, a resin welding material 17A.

An annular bead core 20 extending around the tire circumferential direction is embedded in each of the bead portions 14. The bead core 20 is configured from a bead cord (not illustrated in the drawings). The bead cord is for example configured by a metal cord such as a steel cord, an organic fiber cord, a resin-covered organic fiber cord, or a hard resin. Note that the bead core 20 itself may be omitted as long as sufficient rigidity of the bead portion 14 can be secured.

Of the surface of each of the bead portions 14, at least a portion that contacts the rim (not illustrated in the drawings) is disposed with the covering layer 22 in order to increase the airtightness against the rim. The covering layer 22 is configured from a material such as a rubber material that is softer and more weather-resistant than the tire case 17.

In the present exemplary embodiment, the covering layer 22 is folded back from an inner face at an inner side in the tire axial direction of each of the bead portions 14 toward an outer side in the tire axial direction, and extends across an outer face of the side portion 16 to the vicinity of an outer side end portion 12A, in the tire axial direction, of the belt 12. Note that the covering layer 22 may be omitted if sealing properties (airtightness) between the bead portion 14 and the rim (not illustrated in the drawings) can be secured by the bead portion 14 of the tire case 17 alone.

A reinforcing member (polymer or metal fibers, cord, nonwoven fabric, woven fabric, or the like) may be embedded in the tire case 17.

The belt 12 is a reinforcing layer provided at the outer periphery of the tire case 17. In the present exemplary embodiment, the outer periphery of the tire case 17 corresponds to the outer circumferential surface 18A of the crown portion 18. In the belt 12, for example a resin-covered cord 28 is wound onto the outer periphery of the tire case 17 in a spiral pattern around the tire circumferential direction and is bonded to the tire case 17, and sections of the resin-covered cord 28 that are mutually adjacent in the tire axial direction are bonded to one another by welding. The resin-covered cord 28 of the present exemplary embodiment is configured by covering two reinforcing cords 24 with a covering resin 26.

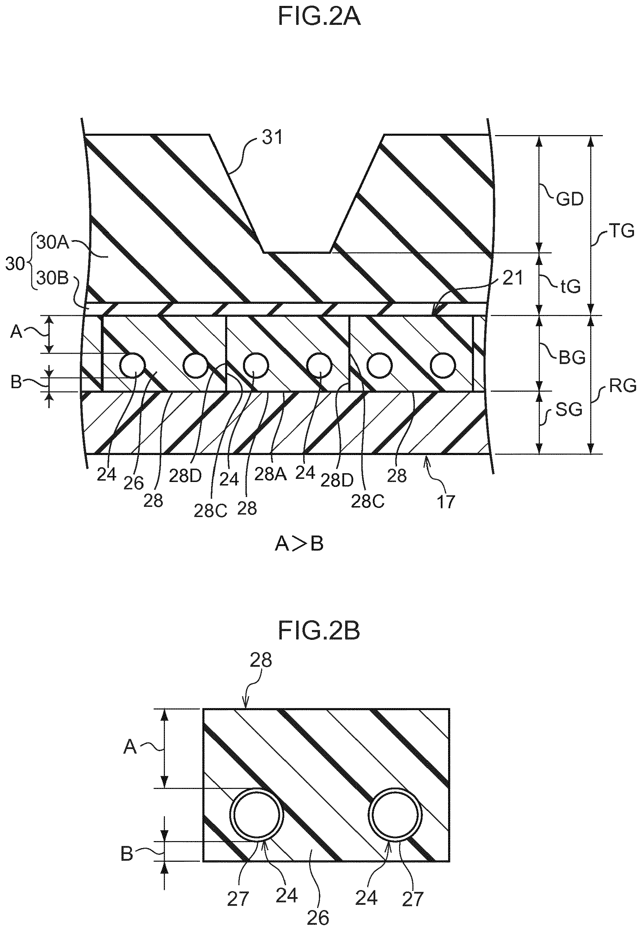

As illustrated in Fig. 2A, "sections of the resin-covered cord 28 that are mutually adjacent in the tire axial direction" refers to one side face 28C of the resin-covered cord 28 and another side face 28D of the resin-covered cord 28 being adjacent to each other in the tire axial direction. The side faces 28C, 28D are made to oppose each other when winding the resin-covered cord 28 in a spiral pattern.

An inner circumferential surface of the belt 12, in other words an inner side face 28A, in the tire radial direction, of the resin-covered cord 28, is bonded to the outer periphery of the tire case 17. The tread 30 formed of a rubber material is laid at the outer side in the tire radial direction of the belt 12. The tread 30 covers the belt 12 from the outer side in the tire radial direction.

The tread 30 is configured including a tread body rubber layer 30A that contacts the road surface and is formed of a rubber material with excellent anti-wear properties, and a cushioning rubber 30B that is integrally provided at an inner side in the tire radial direction of the tread body rubber layer 30A and that has lower elasticity than the rubber material configuring the tread body rubber layer 30A. The cushioning rubber 30B improves ride comfort by absorbing input from the road surface received by the tread body rubber layer 30A during travel of the tire 10. Note that the cushioning rubber 30B may be omitted from the tread 30. The rubber materials employed in the tread 30 may be rubber materials that are generally employed in the treads of conventional pneumatic tires.

A gauge TG of the tread 30 at the outer side in the tire radial direction of the belt 12 (a dimension from an outer circumferential surface of the belt 12 to the tread face of the tread 30) is preferably within a range of from 9 mm to 15 mm.

The tread 30 of the present exemplary embodiment is formed with circumferential direction grooves 31 for drainage on both sides in the width direction of the tire equatorial plane CL. A groove depth GD of the circumferential direction grooves 31 is preferably within a range of from 5.5 mm to 9.0 mm, and a dimension tG from the groove bottoms of the circumferential direction grooves 31 to the outer circumferential surface of the belt 12 is preferably within a range of from 1.5 to 3.0 mm.

The resin-covered cord 28 of the present exemplary embodiment has a rectangular cross-section profile, in other words a rectangular cross-section profile with its length direction along a belt width direction, with the two reinforcing cords 24 arranged in a row along the length direction.

In the belt 12, a thickness A of the covering resin 26 from the reinforcing cords 24 to the outer circumferential surface of the belt 12 is preferably at least 0.1 mm, and is more preferably at least 0.5 mm. A thickness B of the covering resin 26 from the reinforcing cords 24 to the tire case 17 is preferably at least 0.05 mm.

A gauge BG of the belt 12 is preferably within a range of from 1.15 mm to 2.0 mm. Supposing each of the reinforcing cords 24 has a diameter of 1.0 mm, a lower limit value of the gauge BG of the belt 12 would be 1.0 mm + 0.1 mm (lower limit value of the thickness A) + 0.05 mm (lower limit value of the thickness B) = 1.15 mm. Since an upper limit of the gauge BG of the belt 12 is 2.0 mm, a reinforcing cord 24 with a diameter larger than 1.0 mm may be employed while still satisfying the lower limit value of the thickness A and the lower limit value of the thickness B.

A combined gauge RG of the tire case 17 and the belt 12 is preferably no greater than 3.5 mm.

In the belt 12 of the present exemplary embodiment, a relationship A > B is satisfied, wherein A is the thickness (minimum distance) of the covering resin 26 from the reinforcing cords 24 to the outer circumferential surface of the belt 12 as measured along the thickness direction of the belt 12, and B is the thickness (minimum distance) of the covering resin 26 from the reinforcing cords 24 to the tire case 17 as measured along the thickness direction of the belt 12. In other words, the center of each of the reinforcing cords 24 is positioned on a tire case 17 side of a thickness direction intermediate portion of the belt 12. The reinforcing cords 24 are thus further from the tread 30 than from the tire case 17.

The reinforcing cords 24 may be configured by monofilament (single strand) metal fibers, organic fibers, or the like, or may be configured by multifilaments (twisted strands) by twisting such fibers together. The covering resin 26 is, for example, configured by a thermoplastic elastomer. Steel cords configured by twisting together plural steel filaments are employed as the reinforcing cords 24 of the present exemplary embodiment.

Such filaments may be subjected to surface adhesion processing in order to improve adhesion to the covering resin 26. This is surface processing performed to the metal in order to improve adhesion to the thermoplastic material. The surface adhesion processing may be organic plating, or surface soaking.

Organic plating such as the organic electrolytic plating disclosed in Japanese Patent Publication (JP-B) No. H05-51671, JP-A No. 2001-1445, and the like may be employed.

Surface soaking such as the surface processing disclosed in JP-ANo. 2003-170531 may be employed. In this surface processing, a bead core B and a reinforcing cord 26A are soaked in an aqueous solution of a water soluble amine compound (or ammonia) for a fixed period of time. Hydrazine or a dielectric thereof, a low carbon number amine compound, pyridine, aniline, or the like may be employed as the water soluble amine compound. Examples of low carbon number amines that are preferably employed include methylamine, dimethylamine, trimethylamine, ethylamine, diethylamine, triethylamine, and the like.

As illustrated in Fig. 2B, each of the reinforcing cords 24 is configured including an adhesion layer 27 in order to raise adhesive strength (bonding strength) with the covering resin 26. The adhesion layer 27 employs a material that is less readily permeated by moisture than that the covering resin 26, in other words a material that does not readily absorb moisture. Examples of adhesives employed for the adhesion layer 27 include adhesives containing one or two or more types of thermoplastic resin, such as a denatured olefin-based resin (denatured polyethylene-based resin, denatured polypropylene-based resin, or the like), a polyamide-based resin, a polyurethane-based resin, a polyester-based resin, a denatured polyester-based resin, an ethylene-acrylate ethylcopolymer, or an ethylene-vinyl acetate copolymer, as a main component (main agent). Of these, from the perspective of adhesion between a metal member and a resin layer, a hot melt adhesive containing at least one item selected from the group consisting of a denatured olefin-based resin, a polyester-based resin, a denatured polyester-based resin, an ethylene-ethyl acrylate copolymer, and an ethylene-vinyl acetate copolymer is preferable, a hot melt adhesive containing at least one item selected from the group consisting of a denatured olefin-based resin and a denatured polyester-based resin is more preferable. Of these, a hot melt adhesive containing at least one item selected from the group consisting of an acid-denatured olefin-based resin and a denatured polyester-based resins is still more preferable, and a hot melt adhesive containing an acid-denatured polyester-based resin is particularly preferable.

A thickness of the adhesion layer 27 may, for example, be approximately 0.05 mm. This encompasses cases in which the thickness of the adhesion layer 27 is thinner than 0.05 mm and cases in which the thickness of the adhesion layer 27 is thicker than 0.05 mm.

Resin materials employed for the tire case 17 and the covering resin 26 in the present exemplary embodiment are not limited to thermoplastic elastomers. For example, thermoplastic resins, thermosetting resins, and other general purpose resins, as well as engineering plastics (including super engineering plastics) may be employed as the resin materials. Note that the resin materials referred to herein do not include vulcanized rubber.

Thermoplastic resins (including thermoplastic elastomers) are polymer compounds of materials that soften and flow with increased temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break (JIS K7113), also as defined by JIS K7113, of 50% or greater. Materials with a Vicat softening temperature, as defined by JIS K7206 (method A), of 130°C may be employed.

Thermosetting resins are curable polymer compounds that form a 3 dimensional mesh structure with increasing temperature. Examples of thermosetting resins include phenolic resins, epoxy resins, melamine resins, and urea resins.

As resin materials, in addition to the above thermoplastic resins (including thermoplastic elastomers) and thermosetting resins, general purpose resins may also be employed, such as meth(acrylic)-based resins, EVA resins, vinyl chloride resins, fluororesins, and silicone-based resins.

### Tire Manufacturing Method

Explanation follows regarding a manufacturing method of the tire 10 of the present exemplary embodiment. First, a thermoplastic resin material is injection molded to form a set of the tire halves 17H incorporating the bead cores 20. The covering layer 22 is formed at the outer faces of the tire halves 17H.

Next, the pair of tire halves 17H are made to face each other and end portions of the portions configuring the crown portion 18 are abutted against each other. The resin welding material 17A is applied to the abutting portions in a molten state, and the pair of tire halves 17H are bonded together. The annular tire case 17 is formed in this manner.

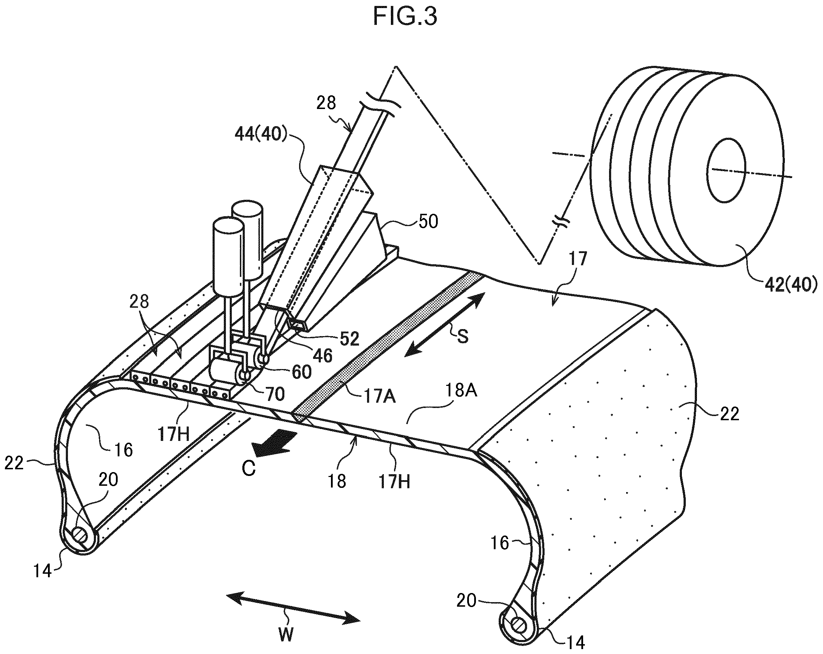

Next, explanation follows regarding a process to wind the resin-covered cord 28 onto the outer periphery of the tire case 17. First, the tire case 17 is attached to a tire support device (not illustrated in the drawings) that rotatably supports the tire case 17, and as illustrated in Fig. 3, a cord feeder 40, a heater 50, a press roller 60 serving as a pressing device, and a cooling roller 70 serving as a cooling device are moved to the vicinity of the outer periphery of the tire case 17.

The cord feeder 40 is configured including a reel 42 onto which the resin-covered cord 28 is wound, and a guide member 44. The guide member 44 is used to guide the resin-covered cord 28 unwound from the reel 42 onto the outer periphery of the tire case 17 (the outer circumferential surface 18A of the crown portion 18). The guide member 44 is tube shaped and the resin-covered cord 28 passes through an interior of the guide member 44. The resin-covered cord 28 is fed out through an opening 46 of the guide member 44 toward the outer circumferential surface 18A of the crown portion 18.

The heater 50 blows hot air onto the thermoplastic resin, thereby heating and melting portions onto which the hot air is blown. The locations onto which the hot air is blown correspond to the inside face 28A of the resin-covered cord 28 to be pressed against the outer circumferential surface 18A of the crown portion 18, and a portion of the outer circumferential surface 18A of the crown portion 18 where the resin-covered cord 28 is to be laid. Note that in cases in which the resin-covered cord 28 has already been wound once or more around the circumference of the outer circumferential surface 18A of the crown portion 18 such that resin-covered cord 28 that has been pressed against the outer circumferential surface 18A is present, the hot air is also blown onto the side face 28C thereof.

The heater 50 blows out air heated by an electrical heating coil (not illustrated in the drawings) through a blower outlet 52 in an airflow generated by a fan (not illustrated in the drawings). Note that the configuration of the heater 50 is not limited to that described above, and any configuration may be applied as long as the thermoplastic resin can be heated and melted. For example, a hot iron may be contacted against locations to be melted to heat and melt the contacted portions. Alternatively, locations to be melted may be heated and melted using radiant heat, or may be heated and melted by irradiation with infrared radiation.

As illustrated in Fig. 3, the press roller 60 presses the resin-covered cord 28 against the outer periphery of the tire case 17 (the outer circumferential surface 18A of the crown portion 18), and is capable of adjusting the pressing force. A roller surface of the press roller 60 is treated so as to prevent molten resin material from adhering thereto. The press roller 60 is capable of rotating, and in a state in which the resin-covered cord 28 is being pressed against the outer periphery of the tire case 17, the press roller 60 rotates following the rotation direction of the tire case 17 (arrow C direction).

The cooling roller 70 is disposed on a downstream side of the press roller 60 in the rotation direction of the tire case 17 (arrow C direction). The cooling roller 70 cools the resin-covered cord 28 and cools the crown portion 18 side through the resin-covered cord 28 while pressing the resin-covered cord 28 against the outer periphery of the tire case 17 (the outer circumferential surface 18A of the crown portion 18). Similarly to the press roller 60, the pressing force of the cooling roller 70 can be adjusted, and the roller surface is treated so as to prevent molten resin material from adhering thereto. Moreover, the cooling roller 70 is capable of rotating similarly to the press roller 60, and in a state in which the resin-covered cord 28 is being pressed against the outer periphery of the tire case 17, the cooling roller 70 rotates following the rotation direction of the tire case 17 (arrow C direction). A liquid (for example water) flows through the interior of the cooling roller 70, and heat exchange with this liquid enables the resin-covered cord 28 contacted by the roller surface to be cooled. Note that the cooling roller 70 may be omitted in cases in which the molten resin material is cooled naturally.

As illustrated in Fig. 3, when winding the resin-covered cord 28 onto the outer periphery of the tire case 17, the tire case 17 that is attached to the tire support device (not illustrated in the drawings) is rotated in the arrow C direction, and the resin-covered cord 28 is fed out toward the outer circumferential surface 18A of the crown portion 18 through the opening 46 of the cord feeder 40. Note that as illustrated in Figs. 2, the position of the reinforcing cords 24 is displaced toward one side in the belt thickness direction in the resin-covered cord 28 employed here.

Hot air is blown through the blower outlet 52 of the heater 50, and the inside face 28A of the resin-covered cord 28 is adhered to a molten portion of the crown portion 18 as the inside face 28A of the resin-covered cord 28 and the portion of the crown portion 18 where the resin-covered cord 28 is to be laid are heated and melted. The resin-covered cord 28 is then pressed against the outer circumferential surface 18A of the crown portion 18 by the press roller 60. When this is performed, the side faces 28C, 28D of sections of the resin-covered cord 28 that are mutually adjacent in the tire axial direction are also bonded together (see Fig. 2A). The outside face 28B of the resin-covered cord 28 then contacts the cooling roller 70 such that the molten portion of the crown portion 18 and the molten portion of the resin-covered cord 28 are cooled through the resin-covered cord 28 and thereby solidified. The resin-covered cord 28 and the crown portion 18 are welded together in this manner.

By winding the resin-covered cord 28 onto the outer circumferential surface 18A of the crown portion 18 around the tire circumferential direction in a spiral pattern and pressing the resin-covered cord 28 against the outer circumferential surface 18A in this manner, the belt 12 is formed at the outer periphery of the tire case 17, specifically, at the outer periphery of the crown portion 18. Note that in order to wind the resin-covered cord 28 on in a spiral pattern, the position of the opening 46 of the cord feeder 40 may be moved in the tire axial direction as the tire case 17 rotates, or the tire case 17 may be moved in the tire axial direction.

Although not described in detail, the tire 10 is completed by providing the unvulcanized tread 30 at the outer side in the tire radial direction of the tire case 17 and the belt 12 and performing a vulcanization process.

### Operation

As illustrated in Fig. 2A, in the belt 12 of the present exemplary embodiment, a relationship A > B is satisfied, wherein A is the thickness (minimum distance) of the covering resin 26 from the reinforcing cords 24 to the outer circumferential surface of the belt 12, and B is the thickness (minimum distance) of the covering resin 26 from the reinforcing cords 24 to the tire case 17. Accordingly, the reinforcing cords 24 are located further from the rubber material configuring the tread 30 than they would be in a case in which the reinforcing cords 24 were laid at the thickness direction intermediate portion of the belt 12.

In the vulcanization process, moisture in the rubber material configuring the tread 30 may permeate the covering resin 26 of the belt 12. However, in the belt 12 employed in the tire 10 of the present exemplary embodiment, supposing moisture present in the rubber material were to permeate the covering resin 26, since the reinforcing cords 24 are positioned toward the tire case 17 side away from the tread 30, the distance from the tread 30 to the reinforcing cords 24 is made longer, and moisture is less likely to reach the reinforcing cords 24. The reinforcing cords 24 are thus less readily affected by moisture that has permeated from the rubber material.

In the belt 12 of the present exemplary embodiment, the position of the reinforcing cords 24 is separated from the tread 30 within the limited thickness of the belt 12. Accordingly, an increase in the thickness of the belt 12 and an increase in the weight of the belt 12 are avoided.

In the belt 12, the thickness A of the covering resin 26 from the reinforcing cords 24 to the outer circumferential surface of the belt 12 is preferably at least 0.1 mm, and is more preferably at least 0.5 mm in order to suppress the permeation of moisture from the tread side toward the reinforcing cords 24. This effectively enables the reinforcing cords 24 to be less readily affected by moisture permeating from the rubber material configuring the tread 30, enabling corrosion (rusting) of the steel cords configuring the reinforcing cords 24 to be effectively suppressed during actual use. Moreover, in the present exemplary embodiment, the adhesion layer 27 that is less readily permeated by moisture than the covering resin 26 is provided around the outer periphery of the reinforcing cords 24, thereby enabling corrosion (rusting) of the steel cords to be more effectively suppressed than in cases in which an adhesion layer that is readily permeated by moisture is provided.

In the belt 12, the thickness B of the covering resin 26 from the reinforcing cords 24 to the tire case 17 is preferably at least 0.05 mm. This is in order to secure the requisite covering resin 26 at the welding portion (the portion where resin materials of the covering resin 26 and the tire case 17 are welded together) when welding the covering resin 26 of the resin-covered cord 28 and the tire case 17 together. In other words, the portion of the belt 12 where the covering resin 26 has the thickness B from the reinforcing cords 24 to the tire case 17 corresponds to a welding region to weld the belt 12 to the tire case 17.

Setting the gauge BG of the belt 12 to at least 1.15 mm enables the preferable lower limit values (0.1 mm and 0.05 mm) of the thickness A and the thickness B to be secured as long as the diameter of the reinforcing cords 24 is no greater than 1.0 mm. Moreover, setting the upper limit of the gauge BG of the belt 12 to 2.0 mm enables reinforcing cords 24 having a diameter larger than 1.0 mm to be employed while still satisfying the preferable lower limit value of the thickness A and the lower limit value of the thickness B.

By setting the combined gauge RG of the tire case 17 and the belt 12 to no greater than 3.5 mm, the amount of resin employed does not increase more than necessary, enabling a reduction in the weight of the tire 10.

Setting the gauge TG of the tread 30 within a range of from 9 mm to 15 mm in the tire 10 of the present exemplary embodiment enables both the lifespan of the passenger car tire and a reduction in weight to be secured. If the gauge TG of the tread 30 is thinner than 9 mm, the time taken (travel distance) for the tread 30 to reach its wear limit (i.e. when the remaining groove depth of the circumferential direction grooves 31 reaches a dimension defined by safety standards due to wear) is shortened. In other words, the lifespan of the tire is shortened. On the other hand, if the gauge TG of the tread 30 exceeds 15 mm, a reduction in weight becomes difficult to achieve.

### Second Exemplary Embodiment

Explanation follows regarding a tire 10 according to a second exemplary embodiment of the present invention, with reference to the drawings. Note that configurations matching those of the first exemplary embodiment are allocated the same reference numerals, and explanation thereof is omitted.

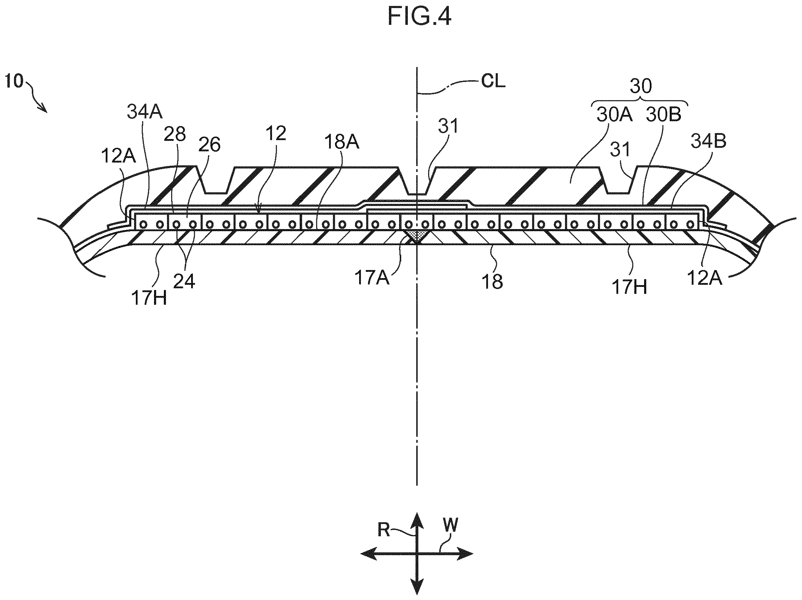

As illustrated in Fig. 4, in the tire 10 of the present exemplary embodiment, an outer circumferential surface of the belt 12 is covered by a reinforcing member 34A and a reinforcing member 34B in order to reinforce the belt 12. The reinforcing member 34A and the reinforcing member 34B overlap each other at a tire equatorial plane CL. Outer side portions in the tire width direction of the reinforcing member 34A and the reinforcing member 34B extend to outer sides in the width direction of the belt 12 and cover the outer circumferential surface of the tire case 17.

As an example, the reinforcing member 34A and the reinforcing member 34B are fibrous reinforcing members configured by covering plural fiber cords with rubber, and are what are generally referred to as reinforcement plies or cap layers. Note that although the reinforcing member 34A, the reinforcing member 34B, and the cushioning rubber 30B are each has a gauge of 1 mm in the tire 10 of the present exemplary embodiment, the respective gauges may be a value other than 1 mm. Although two reinforcing members, namely the reinforcing member 34A and the reinforcing member 34B, are employed in the tire 10 of the present exemplary embodiment, three or more reinforcing members may be employed.

In a tread 30 of the tire 10 of the present exemplary embodiment, circumferential direction grooves 31 are formed at the tire equatorial plane CL and on both sides in a tire width direction of the tire equatorial plane CL.

In the tire 10 of the present exemplary embodiment, the reinforcing member 34A and the reinforcing member 34B are superimposed on each other in the vicinity of the tire equatorial plane CL of the tread 30, thereby enabling the ability to withstand input of a projection to the tread 30, namely what is referred to as plunger withstand performance, to be improved.

Note that in cases in which the outer circumferential surface of the belt 12 is covered by the reinforcing member 34A and the reinforcing member 34B as in the tire 10 of the present exemplary embodiment, a dimension from a groove bottom of the circumferential direction groove 31 on the tire equatorial plane CL to an outermost portion of the reinforcing members is preferably within a range of from 1.5 mm to 3.0 mm.

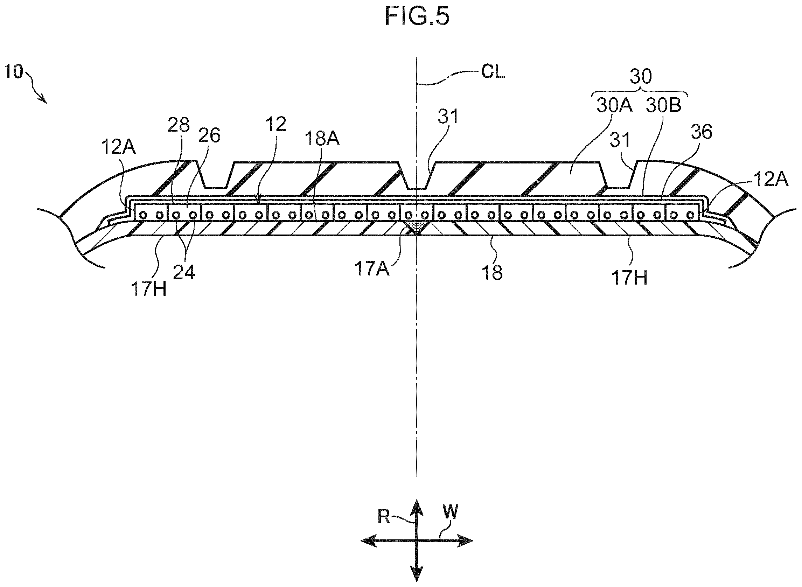

In the tire 10 of the present exemplary embodiment, the belt 12 is covered by two reinforcing members, namely the reinforcing member 34A and the reinforcing member 34B. However, the present invention is not limited thereto, and as illustrated in Fig. 5, the belt 12 may be covered by a single reinforcing member 36, or, although not illustrated in the drawings, may be covered by three or more reinforcing members.

### Other Exemplary Embodiments

Although explanation has been given regarding examples of exemplary embodiments of the present invention, exemplary embodiments of the present invention are not limited thereto, and obviously various other modifications may be implemented within a range not departing from the scope of the present invention.

Although the tire 10 of the exemplary embodiments described above is employed in a passenger car, the present disclosure is not limited to application to a passenger car, and there is no limitation to the tire to which the present disclosure is applied. For example, the present disclosure may be applied to another tire type such as the tires employed in small trucks.

The disclosure of Japanese Patent Application No. 2017-110916, filed on June 5, 2017, is incorporated in its entirety by reference herein.

All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A tire, comprising:
a circular tire frame member formed from a resin material;
a belt provided at an outer side, in a tire radial direction, of the tire frame member and configured by covering a reinforcing cord with a covering resin; and
a tread provided at an outer periphery of the belt and configured from a rubber material, wherein:
the belt has a gauge within a range of from 1.15 mm to 2.0 mm,
a relationship A > B is satisfied, wherein A is a thickness of the covering resin from the reinforcing cord to an outer circumferential surface of the belt and B is a thickness of the covering resin from the reinforcing cord to the tire frame member, and
a combined gauge of the tire frame member and the belt is not greater than 3.5 mm.

2. The tire of claim 1, wherein:
the reinforcing cord includes an adhesion layer; and
the thicknesses A and B of the covering resin are measured with reference to an outer circumferential surface of the adhesion layer.

3. The tire of claim 1 or claim 2, wherein a gauge from an outer circumferential surface of the belt to a ground contact face of the tread is within a range of from 9 mm to 15 mm, when the tire is new.

4. The tire of any one of claim 1 to claim 3, wherein a rubber-covered belt reinforcement member is interposed between the tread and the belt.

5. The tire of any one of claim 1 to claim 4, wherein the thickness A is at least 0.1 mm.

6. The tire of any one of claim 1 to claim 4, wherein the thickness A is at least 0.5 mm.

7. The tire of any one of claim 1 to claim 6, wherein the reinforcing cord is configured by a steel cord.
